# EUROPEAN PATENT SPECIFICATION

(11) **EP 4 534 156 B1**
(45) Date of publication and mention of the grant of the patent: **22.07.2026**
(21) Application number: 24198466.5
(22) Date of filing: 04.09.2024
(51) Int. Cl.: A63B 37/00

(54) **GOLF BALL**
GOLFBALL
BALLE DE GOLF

(30) Priority: 04.10.2023 JP 2023172935
(43) Date of publication of application: 09.04.2025
(73) Proprietor: Sumitomo Rubber Industries, Ltd., Kobe-shi, Hyogo 651-0072 (JP)
(72) Inventor: INOUE, Hidetaka, Kobe-shi, 651-0072 (JP); FUKAO, Kaita, Kobe-shi, 651-0072 (JP)
(74) Representative: Manitz Finsterwald Patent- und Rechtsanwaltspartnerschaft mbB

(56) References cited:
- JP-A- 2006 218 294
- JP-A- 2020 103 340
- US-A1- 2021 106 879

## Description

### FIELD OF THE DISCLOSURE

The present disclosure relates to a golf ball, and particularly relates to a golf ball comprising a spherical core, an intermediate layer and an outermost cover.

### DESCRIPTION OF THE RELATED ART

Conventionally, as a spherical core of a golf ball, spherical cores made from various rubber materials have been proposed. For example, JP S60-92780 A discloses a range golf ball obtained by vulcanizing a composition containing 100 parts by weight of a base rubber, 3 to 35 parts by weight of a low-resilient rubber, 20 to 30 parts by weight of methacrylic acid, and 20 to 50 parts by weight of a metal compound that can form a metal salt with methacrylic acid.

In addition, JP S61-71069 A discloses a range golf ball, obtained from a composition containing 100 parts by weight of a base rubber, 3 to 35 parts by weight of a 10 to 60 mole % epoxidized natural rubber, 20 to 35 parts by weight of methacrylic acid, and 20 to 50 parts by weight of zinc oxide.
US 2021/106879 A1 discloses a golf ball according to the preamble of claim 1. JP 2006 218294 A and JP 2020 103340 A disclose further prior art.

### SUMMARY OF THE INVENTION

The invention is defined by the appended claims.

### SUMMARY OF THE DISCLOSURE

It is important to stop the ball on the green and bring the ball close to the pin on approach shots. Thus, a golf ball having an increased spin rate on approach shots has been developed.

However, the spin rate varies depending on the hitting points of the golf ball. For an average golfer, the hitting point is unstable, and thus it is difficult to control the spin rate. For a golf ball with an increased spin rate, difference in the hitting points causes a great variation in the spin rate of the golf ball, thus the golf ball also has a great variation in the distance (rolling distance) until the ball stops, and it becomes more difficult to control the flight distance.

In addition, the touch when hitting the golf ball is also important for hitting the golf ball precisely on the aimed distance on approach shots. Thus, the soft shot feeling is desirable for approach shots.

The present disclosure has been made in view of the above circumstances, and an object of the present disclosure is to provide a golf ball having good shot feeling, a short rolling distance and excellent controllability on approach shots.

The present disclosure that has solved the above problem provides a golf ball comprising a spherical core, an intermediate layer covering the spherical core, and an outermost cover covering the intermediate layer, wherein the spherical core is formed from a rubber composition containing a base rubber, a co-crosslinking agent, and a crosslinking initiator, the base rubber contains a natural rubber, a center hardness (H0) of the spherical core, a hardness (H_{2.5}) at a point having a radial distance of 2.5 mm from a center of the spherical core, a hardness (H_{5.0}) at a point having a radial distance of 5.0 mm from the center of the spherical core, a hardness (H_{7.5}) at a point having a radial distance of 7.5 mm from the center of the spherical core, a hardness (H₁₀) at a point having a radial distance of 10 mm from the center of the spherical core, a hardness (H_{12.5}) at a point having a radial distance of 12.5 mm from the center of the spherical core, a hardness (H₁₅) at a point having a radial distance of 15 mm from the center of the spherical core, and a surface hardness (Hs) of the spherical core satisfy a relationship of H0<H_{2.5}<H_{5.0}<H_{7.5}<H₁₀<H_{12.5}<H₁₅<Hs, the center hardness (H0) of the spherical core is 60 or less in Shore C hardness, and a slab hardness of an intermediate layer composition forming the intermediate layer is greater than a slab hardness of a cover composition forming the outermost cover.

The rubber composition forming the spherical core of the golf ball according to the present disclosure contains a natural rubber as a base rubber, thus the launch angle becomes great on approach shots, and the ball initial velocity can be controlled to a low level. In addition, the controlled hardness distribution of the spherical core makes the spherical core deform smoothly, and the shot feeling on approach shots is good.

Further, the golf ball according to the present disclosure has a good shot feeling and a low ball initial velocity on approach shots, thus the rolling distance is easily controlled, and the controllability improves.

According to the present disclosure, a golf ball having good shot feeling, a short rolling distance and excellent controllability on approach shots, is obtained.

### BRIEF DESCRIPTION OF THE DRAWINGS

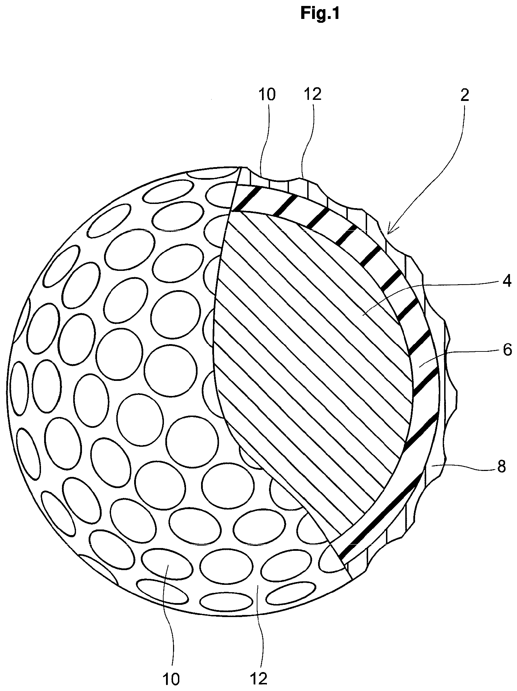

The figure is a partially cutaway cross-sectional view showing a golf ball according to the present disclosure.

### DESCRIPTION OF THE PREFERRED EMBODIMENT

The golf ball according to the present disclosure comprises a spherical core, an intermediate layer covering the spherical core, and an outermost cover covering the intermediate layer.

### (Spherical core)

The spherical core is formed from a rubber composition containing a base rubber, a co-crosslinking agent, and a crosslinking initiator.

The base rubber contains a natural rubber (NR).

The natural rubber is prepared by slicing plants that produce natural rubber latex, collecting the latex, and coagulating the rubber component contained in the latex. The natural rubber may be used solely, or at least two of them may be used in combination.

Examples of the plants that produce the natural rubber latex include Para rubber tree and Ceara rubber tree which belong to the Euphorbiaceae family; Indian rubber tree, Panama rubber tree and Lagos rubber tree which belong to the Moraceae family; Arabia rubber tree and Tragacanth rubber tree which belong to the Fabaceae family; Jelutong tree, Zanzibar rubber tree, Funtumia elastica and Urceola which belong to the Apocynaceae family; Guayule rubber tree and Rubber dandelion which belong to the Composite family; Gutta-percha tree, Balata rubber tree and Sapodilla which belong to the Sapotaceae family; Ipomoea nil which belongs to the Asclepiadaceae family; and Eucommia which belongs to the Eucommiaceae family.

Examples of the natural rubber include a CV grade in which a rubber viscosity is stabilized by adding a viscosity stabilizer to the raw latex, and a non-CV grade in which a rubber viscosity is not stabilized. These natural rubbers may be used solely, or at least two of them may be used in combination. Among them, the CV grade having the stabilized viscosity is particularly preferable. It is noted that the natural rubber may be either one of SMR (Standard Malaysian Rubber) or SVR (Standard Vietnam Rubber).

The natural rubber is a cis-1,4-polyisoprene, and each of a sheet rubber and a block rubber can be used. In addition, the natural rubber also includes a modified natural rubber obtained by modifying the natural rubber, such as an epoxidized natural rubber, a methacrylic acid-modified natural rubber, a halogen-modified natural rubber, a deproteinized natural rubber, a maleic acid-modified natural rubber, a sulfonic acid-modified natural rubber, and a styrene-modified natural rubber. Among them, the natural rubber preferably does not contain the epoxidized natural rubber.

As the natural rubber, Technical Specified Rubbers (TSR), and Ribbed Smoked Sheet (RSS) are preferable. In addition, the natural rubber may contain a viscosity stabilizer.

The Mooney viscosity (ML₁₊₄ (100 °C)) of the natural rubber is preferably 30 or more, more preferably 35 or more, and even more preferably 40 or more, and is preferably 80 or less, more preferably 75 or less, and even more preferably 70 or less. It is noted that the Mooney viscosity (ML₁₊₄ (100 °C)) in the present disclosure is a value measured according to JIS K6300 (2013) using an L rotor under the conditions of preheating time: 1 minute, rotor rotation time: 4 minutes, and temperature: 100 °C.

The base rubber may consist of the natural rubber, or contain the natural rubber and a synthesized rubber. When the base rubber contains the natural rubber and the synthesized rubber, the amount of the natural rubber is 30 mass % or more, preferably 40 mass % or more, and most preferably 70 mass % or more in 100 mass % of the base rubber. If the amount is 20 mass % or more, the flight distance controllability on approach shots is further enhanced.

Examples of the synthesized rubber include a diene-based rubber such as a polybutadiene rubber (BR), a polyisoprene rubber (IR), a styrene-polybutadiene rubber (SBR), a chloroprene rubber (CR), a butyl rubber (IIR), and an acrylonitrile-butadiene rubber (NBR); and a non-diene-based rubber such as an ethylene-propylene rubber (EPM), an ethylene-propylene-diene rubber (EPDM), a urethane rubber, a silicone rubber, an acrylic rubber, an epichlorohydrin rubber, a polysulfide rubber, a fluororubber, and a chlorosulfonated polyethylene rubber. These rubbers may be used solely, or at least two of them may be used in combination.

The base rubber may contain the diene-based rubber as the synthesized rubber. In this case, the amount of the diene-based rubber is preferably 5 mass % or more, more preferably 10 mass % or more, and even more preferably 15 mass % or more, and is preferably 80 mass % or less, more preferably 70 mass % or less, and even more preferably 60 mass % or less in 100 mass % of the base rubber.

The base rubber preferably contains the polybutadiene rubber as the diene-based rubber. In particular, the base rubber more preferably contains a high-cis polybutadiene. The high-cis polybutadiene preferably has a cis-1,4 bond in an amount of 40 mass % or more, preferably 80 mass % or more, and more preferably 90 mass % or more. The amount of the high-cis polybutadiene in the diene-based rubber is preferably 50 mass % or more, more preferably 70 mass % or more, and even more preferably 90 mass % or more. The diene-based rubber also preferably consists of the high-cis polybutadiene rubber.

The amount of the 1,2-vinyl bond in the high-cis polybutadiene is preferably 2.0 mass % or less, more preferably 1.7 mass % or less, and even more preferably 1.5 mass % or less.

The high-cis polybutadiene is preferably one synthesized using a rare-earth element catalyst. When a neodymium catalyst employing a neodymium compound which is a lanthanum series rare-earth element compound, is used, a polybutadiene rubber having a high amount of the cis-1,4 bond and a low amount of the 1,2-vinyl bond is obtained with an excellent polymerization activity, and thus such polybutadiene rubber is particularly preferable.

The molecular weight distribution Mw/Mn (Mw: weight average molecular weight, Mn: number average molecular weight) of the high-cis polybutadiene is preferably 2.0 or more, more preferably 2.2 or more, and even more preferably 2.4 or more, and is preferably 6.0 or less, more preferably 5.0 or less, and even more preferably 4.0 or less. If the molecular weight distribution (Mw/Mn) of the high-cis polybutadiene falls within the above range, the processability is enhanced. It is noted that the molecular weight distribution is measured by gel permeation chromatography ("HLC-8120GPC" available from Tosoh Corporation) using a differential refractometer as a detector under the conditions of column: GMHHXL (available from Tosoh Corporation), column temperature: 40 °C, and mobile phase: tetrahydrofuran, and calculated by converting based on polystyrene standard.

The Mooney viscosity (ML₁₊₄ (100 °C)) of the high-cis polybutadiene is preferably 30 or more, more preferably 32 or more, and even more preferably 35 or more, and is preferably 140 or less, more preferably 120 or less, and even more preferably 100 or less.

The co-crosslinking agent has an action of crosslinking a rubber molecule by graft polymerization to a base rubber molecular chain. The co-crosslinking agent may be used solely, or at least two of them may be used in combination. As the co-crosslinking agent, an α,β-unsaturated carboxylic acid having 3 to 8 carbon atoms and/or a metal salt thereof is preferable. Examples of the α,β-unsaturated carboxylic acid having 3 to 8 carbon atoms include acrylic acid, methacrylic acid, fumaric acid, maleic acid and crotonic acid.

Examples of the metal ion constituting the metal salt of the α,β-unsaturated carboxylic acid having 3 to 8 carbon atoms include a monovalent metal ion such as sodium, potassium and lithium; a divalent metal ion such as magnesium, calcium, zinc, barium and cadmium; a trivalent metal ion such as aluminum; and other metal ions such as tin and zirconium. The metal component may be used solely or as a mixture of at least two of them. Among them, the divalent metal ion such as magnesium, calcium, zinc, barium and cadmium is preferably used as the metal component. This is because if the divalent metal salt of the α,β-unsaturated carboxylic acid having 3 to 8 carbon atoms is used, a metal crosslinking easily generates between the rubber molecules. Especially, as the divalent metal salt, zinc acrylate is preferable, because zinc acrylate enhances the resilience of the obtained golf ball. It is noted that the α,β-unsaturated carboxylic acid having 3 to 8 carbon atoms and/or the metal salt thereof may be used solely, or at least two of them may be used in combination.

The amount of the co-crosslinking agent can be appropriately adjusted depending on the desired hardness of the spherical core. The amount of the co-crosslinking agent is preferably 20 parts by mass or more, more preferably 23 parts by mass or more, and even more preferably 25 parts by mass or more, and is preferably 60 parts by mass or less, more preferably 55 parts by mass or less, and even more preferably 50 parts by mass or less, with respect to 100 parts by mass of the base rubber.

The crosslinking initiator is blended to crosslink the base rubber component. As the crosslinking initiator, an organic peroxide is suitable. Specific examples of the organic peroxide include dicumyl peroxide, 1,1-bis(t-butylperoxy)-3,3,5-trimethylcyclohexane, 2,5-dimethyl-2,5-di(t-butylperoxy) hexane and di-t-butyl peroxide. These organic peroxides may be used solely or as a mixture of at least two of them. Among them, dicumyl peroxide is preferably used.

The amount of the crosslinking initiator can be appropriately adjusted depending on the desired hardness of the spherical core. The amount of the crosslinking initiator is preferably 0.2 part by mass or more, more preferably 0.5 part by mass or more, and even more preferably 0.7 part by mass or more, and is preferably 5.0 parts by mass or less, more preferably 2.5 parts by mass or less, and even more preferably 2.0 parts by mass or less, with respect to 100 parts by mass of the base rubber.

In the case that the co-crosslinking agent of the rubber composition consists of the α,β-unsaturated carboxylic acid having 3 to 8 carbon atoms, the rubber composition preferably further contains a metal compound. If the α,β-unsaturated carboxylic acid having 3 to 8 carbon atoms is neutralized with the metal compound in the rubber composition, substantially the same effect as using the metal salt of the α,β-unsaturated carboxylic acid having 3 to 8 carbon atoms as the co-crosslinking agent is provided. In addition, in the case that the α,β-unsaturated carboxylic acid having 3 to 8 carbon atoms and the metal salt thereof are used in combination as the co-crosslinking agent, the metal compound may be used.

The metal compound is not particularly limited, as long as it can neutralize the α,β-unsaturated carboxylic acid having 3 to 8 carbon atoms in the rubber composition. Examples of the metal compound include a metal hydroxide such as magnesium hydroxide, zinc hydroxide, calcium hydroxide, sodium hydroxide, lithium hydroxide, potassium hydroxide, and copper hydroxide; a metal oxide such as magnesium oxide, calcium oxide, zinc oxide, and copper oxide; and a metal carbonate such as magnesium carbonate, zinc carbonate, calcium carbonate, sodium carbonate, lithium carbonate, and potassium carbonate. As the metal compound, the divalent metal compound is preferable, the zinc compound is more preferable. This is because the divalent metal compound reacts with the α,β-unsaturated carboxylic acid having 3 to 8 carbon atoms to form a metal crosslinking. The metal compound may be used solely, or at least two of them may be used in combination.

The rubber composition may further contain an organic sulfur compound. However, it is also preferable that the organic sulfur compound is not contained. The organic sulfur compound is not particularly limited, as long as it is an organic compound having a sulfur atom in the molecule thereof. Examples of the organic sulfur compound include an organic compound having a thiol group (-SH) or a polysulfide bond having 2 to 4 sulfur atoms (-S-S-, -S-S-S-, or -S-S-S-S-), and a metal salt thereof (-SM, -S-M-S- or the like; M is a metal atom). The organic sulfur compound may be used solely or as a mixture of at least two of them.

Examples of the organic sulfur compound include thiophenols, thionaphthols, polysulfides, thiurams, thiocarboxylic acids, dithiocarboxylic acids, sulfenamides, dithiocarbamates, and thiazoles. As the organic sulfur compound, diphenyl disulfides (e.g. diphenyl disulfide, bis(pentabromophenyl) disulfide), thiophenols, and thionaphthols (e.g. 2-thionaphthol) are preferably used.

The amount of the organic sulfur compound can be appropriately adjusted depending on the desired resilience performance of the spherical core. For example, the amount of the organic sulfur compound is preferably 0.05 part by mass or more, more preferably 0.1 part by mass or more, and even more preferably 0.2 part by mass or more, and is preferably 5.0 parts by mass or less, more preferably 3.0 parts by mass or less, and even more preferably 2.0 parts by mass or less, with respect to 100 parts by mass of the base rubber.

The rubber composition may further contain a carboxylic acid and/or a metal salt thereof. As the carboxylic acid and/or the metal salt thereof, a carboxylic acid having 1 to 30 carbon atoms and/or a metal salt thereof is preferable. As the carboxylic acid, an aliphatic carboxylic acid (a saturated fatty acid or an unsaturated fatty acid), or an aromatic carboxylic acid (such as benzoic acid) can be used. In the case that the carboxylic acid and/or the metal salt thereof is contained, the amount of the carboxylic acid and/or the metal salt thereof is preferably 1 part by mass or more and 40 parts by mass or less with respect to 100 parts by mass of the base rubber.

The rubber composition may further contain an additive such as a filler for adjusting weight or the like, an antioxidant, a peptizing agent, and a softener, where necessary.

The filler blended in the rubber composition is mainly used as a weight adjusting agent for adjusting the weight of the golf ball obtained as a final product, and may be blended where necessary. Examples of the filler include an inorganic filler such as barium sulfate, calcium carbonate, magnesium oxide, tungsten powder, and molybdenum powder.

The rubber composition can be obtained by kneading the base rubber, the co-crosslinking agent, the crosslinking initiator, and the other optional components. The kneading method is not particularly limited. For example, the kneading can be conducted with a conventional kneading machine such as a kneading roll, a banbury mixer and a kneader.

The spherical core can be molded, for example, by heat pressing the core rubber composition. The molding conditions for heat pressing the core rubber composition may be determined appropriately depending on the rubber composition. Generally, the heat pressing is preferably carried out at a temperature of 130 °C to 200 °C for 10 to 60 minutes, or carried out in a two-step heating of heating at a temperature of 130 °C to 150 °C for 20 to 40 minutes followed by heating at a temperature of 160 °C to 180 °C for 5 to 15 minutes.

A center hardness (H0) of the spherical core, a hardness (H_{2.5}) at a point having a radial distance of 2.5 mm from a center of the spherical core, a hardness (H_{5.0}) at a point having a radial distance of 5.0 mm from the center of the spherical core, a hardness (H_{7.5}) at a point having a radial distance of 7.5 mm from the center of the spherical core, a hardness (H₁₀) at a point having a radial distance of 10 mm from the center of the spherical core, a hardness (H_{12.5}) at a point having a radial distance of 12.5 mm from the center of the spherical core, a hardness (H₁₅) at a point having a radial distance of 15 mm from the center of the spherical core, and a surface hardness (Hs) satisfy a relationship of H0<H_{2.5}<H_{5.0}<H_{7.5}<H₁₀<H_{12.5}<H₁₅<Hs, and the center hardness (H0) of the spherical core is 60 or less in Shore C hardness.

If the hardness distribution of the spherical core satisfies the above requirement, the spherical core smoothly deforms when being hit, and the shot feeling on approach shots becomes good. If the shot feeling on approach shots becomes good, it becomes easy to feel a response when hitting and adjust the hitting force, thus the flight distance controllability on approach shots improves.

The center hardness (H0), the hardness (H_{2.5}), the hardness (H₁₀), the hardness (H_{12.5}) and the hardness (H₁₅) of the spherical core preferably satisfy relationships of H_{2.5}-H0≥3.0, H_{12.5}-H₁₀≥3.0 and H₁₅-H_{12.5}≥3.0 in Shore C hardness. If the hardness difference (H_{2.5}-H0), the hardness difference (H_{12.5}-H₁₀) and the hardness difference (H₁₅-H_{12.5}) fall within the above range, the deformation amount of the spherical core becomes greater on approach shots, the ball initial velocity right after hitting the golf ball can be controlled to a lower level, and the flight distance controllability on approach shots is further enhanced.

The hardness difference (H_{2.5}-H0) between the hardness (H_{2.5}) at the point having the radial distance of 2.5 mm from the center of the spherical core and the center hardness (H0) of the spherical core is preferably 3.0 or more, more preferably 3.3 or more, and even more preferably 3.5 or more, and is preferably 12.0 or less, more preferably 11.0 or less, and even more preferably 10.0 or less in Shore C hardness.

The hardness difference (H_{12.5}-H₁₀) between the hardness (H_{12.5}) at 12.5 mm point from the center of the spherical core and the hardness (H₁₀) at 10 mm point from the center of the spherical core is preferably 3.0 or more, more preferably 3.4 or more, and even more preferably 3.8 or more, and is preferably 11.0 or less, more preferably 10.0 or less, and even more preferably 9.0 or less in Shore C hardness.

The hardness difference (H₁₅-H_{12.5}) between the hardness (H₁₅) at the point having the radial distance of 15 mm from the center of the spherical core and the hardness (H_{12.5}) at the point having the radial distance of 12.5 mm from the center of the spherical core is preferably 3.0 or more, more preferably 3.4 or more, and even more preferably 3.8 or more, and is preferably 10.0 or less, more preferably 9.0 or less, and even more preferably 8.0 or less in Shore C hardness.

The hardness (H_{5.0}), the hardness (H_{7.5}) and the hardness (H₁₀) of the spherical core preferably satisfy relationships of H_{7.5}-H_{5.0}<3.0 and H₁₀-H_{7.5}<3.0 in Shore C hardness. If the hardness difference (H_{7.5}-H_{5.0}) and the hardness difference (H₁₀-H_{7.5}) fall within the above range, the deformation energy derived from the hitting on approach shots is easily transmitted to the inside of the spherical core, and the properties of the spherical core easily exert.

The hardness difference (H_{7.5}-H_{5.0}) between the hardness (H_{7.5}) at the point having the radial distance of 7.5 mm from the center of the spherical core and the hardness (H_{5.0}) at the point having the radial distance of 5.0 mm from the center of the spherical core is preferably 0.2 or more, more preferably 0.3 or more, and even more preferably 0.4 or more, and is preferably less than 3.0, more preferably 2.8 or less, and even more preferably 2.6 or less in Shore C hardness.

The hardness difference (H₁₀-H_{7.5}) between the hardness (H₁₀) at the point having the radial distance of 10 mm from the center of the spherical core and the hardness (H_{7.5}) at the point having the radial distance of 7.5 mm from the center of the spherical core is preferably 0.1 or more, more preferably 0.2 or more, and even more preferably 0.3 or more, and is preferably less than 3.0, more preferably 2.9 or less, and even more preferably 2.8 or less in Shore C hardness.

The hardness difference (Hs-HO) between the surface hardness (Hs) of the spherical core and the center hardness (H0) of the spherical core is preferably 20 or more, more preferably 22 or more, and even more preferably 24 or more in Shore C hardness. If the hardness difference (Hs-HO) is 20 or more, the shot feeling on driver shots is better. The hardness difference (Hs-HO) is preferably 40 or less, more preferably 37 or less, and even more preferably 35 or less in Shore C hardness.

The center hardness (H0) of the spherical core is preferably 42 or more, more preferably 44 or more, and even more preferably 46 or more, and is preferably 60 or less, more preferably 57 or less, and even more preferably 55 or less in Shore C hardness.

The surface hardness (Hs) of the spherical core is preferably 70 or more, more preferably 72 or more, and even more preferably 74 or more, and is preferably 90 or less, more preferably 87 or less, and even more preferably 85 or less in Shore C hardness.

The diameter of the spherical core is 34.8 mm or more, preferably 36.8 mm or more, and even more preferably 38.0 mm or more, and is 42.2 mm or less, preferably 41.8 mm or less, even more preferably 41.2 mm or less, and most preferably 40.8 mm or less.

When the spherical core has a diameter in the range from 34.8 mm to 42.2 mm, the compression deformation amount of the spherical core (shrinking amount of the spherical core along the compression direction) when applying a load from an initial load of 98 N to a final load of 1275 N to the spherical core is preferably 2.0 mm or more, more preferably 2.5 mm or more, and even more preferably 3.0 mm or more, and is preferably 5.0 mm or less, more preferably 4.5 mm or less, and even more preferably 4.0 mm or less. If the compression deformation amount falls within the above range, the shot feeling is better.

### (Intermediate layer)

The golf ball according to the present disclosure comprises an intermediate layer covering the spherical core.

The slab hardness (Hm) of the intermediate layer composition constituting the intermediate layer is preferably 50 or more, more preferably 55 or more, and even more preferably 60 or more in Shore D hardness. If the slab hardness (Hm) is 50 or more in Shore D hardness, the flight distance performance on driver shots is better. In addition, the slab hardness (Hm) is preferably 74 or less, more preferably 72 or less, and even more preferably 70 or less in Shore D hardness. It is noted that in the case that the intermediate layer has a plurality of layers, the material hardness of the intermediate layer composition constituting the outermost intermediate layer is deemed as the material hardness Hm.

The thickness (Tm) of the intermediate layer is preferably 0.8 mm or more, more preferably 0.9 mm or more, and even more preferably 1.0 mm or more, and is preferably 3.0 mm or less, more preferably 2.6 mm or less, and even more preferably 2.2 mm or less. It is noted that in the case that the intermediate layer has a plurality of layers, the total thickness of all the intermediate layers is deemed as the thickness Tm of the intermediate layer.

### (Outermost cover)

The golf ball according to the present disclosure comprises an outermost cover positioned outside the intermediate layer.

The slab hardness (Hc) of the cover composition constituting the outermost cover is preferably 40 or less, more preferably 38 or less, and even more preferably 36 or less in Shore D hardness. If the slab hardness (Hc) is 40 or less in Shore D hardness, the shot feeling on approach shots is better. In addition, the slab hardness (Hc) is preferably 20 or more, more preferably 22 or more, and even more preferably 24 or more in Shore D hardness. If the slab hardness (Hc) is 20 or more in Shore D hardness, the spin rate on driver shots does not become excessively great, and thus the flight distance performance is better.

The slab hardness (Hm) of the intermediate layer composition forming the intermediate layer is preferably greater than the slab hardness (Hc) of the cover composition forming the outermost cover. If the slab hardness (Hm) is greater than the slab hardness (Hc), the controllability of the flight distance on approach shots can be further enhanced, and the spin rate on driver shots can be controlled.

The hardness difference (Hm-Hc) between the slab hardness (Hm) and the slab hardness (Hc) is more than 0, preferably 5 or more, more preferably 10 or more, and is preferably 50 or less, more preferably 48 or less, and even more preferably 46 or less in Shore D hardness.

The thickness (Tc) of the outermost cover is preferably 0.4 mm or more, more preferably 0.5 mm or more, and even more preferably 0.6 mm or more, and is preferably 1.0 mm or less, more preferably 0.9 mm or less, and even more preferably 0.8 mm or less.

### (Cover composition and intermediate layer composition)

The outermost cover and the intermediate layer are preferably formed from a resin composition containing a base resin.

Examples of the base resin used in the resin composition for forming the outermost cover and the intermediate layer include an ionomer resin, a urethane resin (a thermoplastic polyurethane elastomer, and a thermosetting polyurethane elastomer), a thermoplastic styrene elastomer, a thermoplastic polyamide elastomer, and a thermoplastic polyester elastomer.

Examples of the ionomer resin include a binary ionomer resin prepared by neutralizing at least a part of carboxyl groups in a binary copolymer composed of an olefin and an α, β-unsaturated carboxylic acid having 3 to 8 carbon atoms with a metal ion; a ternary ionomer resin prepared by neutralizing at least a part of carboxyl groups in a ternary copolymer composed of an olefin, an α, β-unsaturated carboxylic acid having 3 to 8 carbon atoms and an α, β-unsaturated carboxylic acid ester with a metal ion; and a mixture of those.

Examples of the binary ionomer resin include Himilan (registered trademark) 1555 (Na), 1557 (Zn), 1605 (Na), 1706 (Zn), 1707 (Na), AM7311 (Mg), AM7329 (Zn), AM7337 (available from Dow-Mitsui Polychemicals Co., Ltd.); Surlyn (registered trademark) 8945 (Na), 9945 (Zn), 8140 (Na), 8150 (Na), 9120 (Zn), 9150 (Zn), 6910 (Mg), 6120 (Mg), 7930 (Li), 7940 (Li), AD8546 (Li) (available from E.I. du Pont de Nemours and Company); and lotek (registered trademark) 8000 (Na), 8030 (Na), 7010 (Zn), 7030 (Zn) (available from ExxonMobil Chemical Corporation).

Examples of the ternary ionomer resin include Himilan AM7327 (Zn), 1855 (Zn), 1856 (Na), AM7331 (Na) (available from Dow-Mitsui Polychemicals Co., Ltd.); Surlyn 6320 (Mg), 8120 (Na), 8320 (Na), 9320 (Zn), 9320W (Zn), HPF1000 (Mg), HPF2000 (Mg) (available from E.I. du Pont de Nemours and Company); and lotek 7510 (Zn), 7520 (Zn) (available from ExxonMobil Chemical Corporation). It is noted that Na, Zn, Li, Mg or the like described in the parentheses after the trade names of the ionomer resin indicate a metal ion type for neutralizing the ionomer resin.

The urethane resin has a urethane bond in the molecule. The urethane bond may be formed by a reaction between a polyol and a polyisocyanate. The polyol is a raw material for the urethane bond and has a plurality of hydroxy groups. A low molecular weight polyol or a high molecular weight polyol may be used.

Specific examples of the thermoplastic polyurethane elastomer include Elastollan (registered trademark) NY80A, NY84A, NY88A, NY95A, ET885, and ET890 (available from BASF Japan Ltd.).

As the thermoplastic styrene based elastomer, a thermoplastic elastomer containing a styrene block can be suitably used. The thermoplastic elastomer containing the styrene block has a polystyrene block that is a hard segment, and a soft segment.

The thermoplastic elastomer containing the styrene block includes a styrene-butadiene-styrene block copolymer (SBS), a styrene-isoprene-styrene block copolymer (SIS), a styrene-isoprene-butadiene-styrene block copolymer (SIBS), a hydrogenated product of SBS, a hydrogenated product of SIS, and a hydrogenated product of SIBS. Examples of the hydrogenated product of SBS include a styrene-ethylene-butylene-styrene block copolymer (SEBS). Examples of the hydrogenated product of SIS include a styrene-ethylene-propylene-styrene block copolymer (SEPS). Examples of the hydrogenated product of SIBS include a styrene-ethylene-ethylene-propylene-styrene block copolymer (SEEPS).

Examples of the thermoplastic styrene based elastomer include TEFABLOC T3221C, T3339C, SJ4400N, SJ5400N, SJ6400N, SJ7400N, SJ8400N, SJ9400N, and SR04 (available from Mitsubishi Chemical Corporation).

The resin composition (cover composition) forming the outermost cover preferably contains the urethane resin and/or the ionomer resin as the base resin, more preferably contains the urethane resin as the base resin. If the outermost cover contains the urethane resin as the base resin, the spin performance of the golf ball is further enhanced, and particularly the spin rate on approach shots is further increased.

When the cover composition contains the urethane resin as the base resin, the amount of the urethane resin in the base resin is preferably 50 mass % or more, more preferably 60 mass % or more, and even more preferably 70 mass % or more. The base resin of the cover composition may consist of the urethane resin (preferably the thermoplastic urethane elastomer).

When the cover composition contains the ionomer resin as the base resin, the amount of the ionomer resin in the base resin is preferably 50 mass % or more, more preferably 60 mass % or more, and even more preferably 70 mass % or more. When the ionomer resin is contained, the thermoplastic styrene elastomer is also preferably used in combination.

The resin composition (intermediate layer composition) forming the intermediate layer preferably contains the ionomer resin as the base resin. If the intermediate layer composition contains the ionomer resin, the resilience performance of the golf ball is enhanced, and particularly the resilience performance on driver shots is excellent. The amount of the ionomer resin is preferably 50 mass % or more, more preferably 60 mass % or more, and even more preferably 70 mass % or more in the base resin of the intermediate layer composition. When the ionomer resin is contained, the thermoplastic styrene elastomer is also preferably used in combination.

The resin composition forming the outermost cover and the intermediate layer may contain a pigment component such as a white pigment (e.g. titanium oxide), a blue pigment and a red pigment, a weight adjusting agent such as zinc oxide, calcium carbonate and barium sulfate, a dispersant, an antioxidant, an ultraviolet absorber, a light stabilizer, a fluorescent material or fluorescent brightener, or the like, in addition to the above base resin.

The amount of the white pigment (e.g. titanium oxide) is preferably 0.5 part by mass or more, more preferably 1 part by mass or more, and even more preferably 1.5 parts by mass or more, and is preferably 10 parts by mass or less, more preferably 8 parts by mass or less, and even more preferably 6 parts by mass or less, with respect to 100 parts by mass of the base resin. If the amount of the white pigment is 0.5 part by mass or more, it is possible to impart the opacity to the intermediate layer or outermost cover. In addition, if the amount of the white pigment is 10 parts by mass or less, the obtained intermediate layer and outermost cover have better durability.

The method for molding the intermediate layer is not particularly limited, and examples thereof include a method which comprises molding the intermediate layer composition into a half shell in advance, covering the spherical core with two of the half shells, and performing compression molding; and a method which comprises injection molding the intermediate layer composition directly onto the spherical core to cover the spherical core.

Examples of the method for molding the cover include a method which comprises molding the cover composition into a hollow shell, covering the spherical body (the spherical core or the spherical body having the intermediate layer formed) with a plurality of the shells, and performing compression molding (preferably a method which comprises molding the cover composition into a hollow half-shell, covering the spherical body with two of the half-shells, and performing compression molding); and a method which comprises directly injection molding the cover composition directly onto the spherical body.

The golf ball body having the cover formed thereon is ejected from the mold, and is preferably subjected to surface treatments such as deburring, cleaning and sandblast where necessary.

In addition, if desired, a paint film or a mark may be formed. The thickness of the paint film is not particularly limited, and is preferably 5 µm or more, more preferably 6 µm or more, and even more preferably 7 µm or more, and is preferably 50 µm or less, more preferably 40 µm or less, and even more preferably 30 µm or less. If the thickness of the paint film is 5 µm or more, the paint film is hard to wear off even if the golf ball is continuously used, and if the thickness of the paint film is 50 µm or less, the dimple effect is fully obtained. It is noted that the effect of the present disclosure is not impaired by the paint film, since the paint film is very thin.

### (Construction of golf ball)

The golf ball according to the present disclosure comprises a spherical core, an intermediate layer covering the spherical core, and an outermost cover covering the intermediate layer. Examples of the construction of the golf ball include a three-piece golf ball composed of a single-layered spherical core, a single-layered intermediate layer covering the spherical core, and an outermost cover covering the intermediate layer; and a multi-piece golf ball (such as a four-piece golf ball, a five-piece golf ball or the like) composed of a single-layered spherical core, at least two intermediate layers covering the spherical core, and an outermost cover covering the intermediate layers.

The golf ball according to the present disclosure preferably has a diameter ranging from 40 mm to 45 mm. In light of satisfying the regulation of US Golf Association (USGA), the diameter is particularly preferably 42.67 mm or more. In light of prevention of air resistance, the diameter is more preferably 44 mm or less, and particularly preferably 42.80 mm or less. In addition, the golf ball according to the present disclosure preferably has a mass of 40 g or more and 50 g or less. In light of obtaining greater inertia, the mass is more preferably 44 g or more, and particularly preferably 45.00 g or more. In light of satisfying the regulation of USGA, the mass is particularly preferably 45.93 g or less.

When the golf ball has a diameter in the range of from 40 mm to 45 mm, the compression deformation amount (shrinking amount along the compression direction) of the golf ball when applying a load from an initial load of 98 N to a final load of 1275 N to the golf ball is preferably 2.0 mm or more, more preferably 2.1 mm or more, and even more preferably 2.2 mm or more, and is preferably 3.0 mm or less, more preferably 2.9 mm or less, and even more preferably 2.8 mm or less. If the compression deformation amount falls within the above range, the shot feeling on driver shots is better.

The surface hardness of the golf ball is preferably 45 or more, more preferably 48 or more, and even more preferably 50 or more, and is preferably 65 or less, more preferably 63 or less, and even more preferably 61 or less in Shore D hardness. If the surface hardness of the golf ball falls within the above range, the impact resistance is excellent and the surface is hardly damaged.

The figure shows one example of the golf ball according to the present disclosure. The figure is a partially cutaway cross-sectional view showing a golf ball 2 according to one embodiment of the present disclosure. The golf ball 2 comprises a spherical core 4, an intermediate layer 6 covering the spherical core 4, and an outermost cover 8 covering the intermediate layer 6. A plurality of dimples 10 are formed on the surface of the outermost cover 8. Other portions than the dimples 10 on the surface of the golf ball are lands 12. The golf ball 2 is provided with a paint layer and a mark layer on an outer side of the outermost cover 8, but these layers are not depicted.

### EXAMPLES

Next, the present disclosure will be described in detail by way of examples. However, the present disclosure is not limited to the examples described below.

### [Evaluation method]

### (1) Compression deformation amount (mm)

The compression deformation amount was measured with a YAMADA type compression tester "SCH". The golf ball or spherical core was placed on a metal rigid plate of the tester. A metal cylinder slowly fell toward the golf ball or spherical core. The golf ball or spherical core sandwiched between the bottom of the cylinder and the rigid plate deformed. The travelling distance of the cylinder when applying a load from an initial load of 98 N to a final load of 1275 N to the golf ball or spherical core was measured. The compression deformation amount (mm) is the travelling distance. The travelling speed of the cylinder before applying the initial load was 0.83 mm/s. The travelling speed of the cylinder when applying the load from the initial load to the final load was 1.67 mm/s.

### (2) Core hardness (Shore C hardness)

The hardness measured at the surface portion of the core was adopted as the surface hardness of the core. In addition, the core was cut into two hemispheres to obtain a cut plane, and the hardness at the central point of the cut plane and the hardness at the predetermined distance from the central point in the radius direction were measured. It is noted that each hardness was measured at four points, and the average value thereof was calculated. An automatic hardness tester (Digitest II, available from Bareiss company) using a testing device of "Shore C" was used to measure the hardness.

### (3) Slab hardness (Shore D hardness)

Sheets with a thickness of about 2 mm were produced by injection molding the resin composition. The sheets were stored at a temperature of 23 °C for two weeks. At least three of these sheets were stacked on one another so as not to be affected by the measuring substrate on which the sheets were placed, and the hardness of the stack was measured with an automatic hardness tester (Digitest II, available from Bareiss company) using a testing device of "Shore D".

### (4) Surface hardness of golf ball

The hardness measured at the land portion of the golf ball surface was adopted as the surface hardness of the ball. The hardness was measured at four points, and the average value thereof was calculated. An automatic hardness tester (Digitest II, available from Bareiss company) using a testing device of "Shore D" was used to measure the hardness.

### (5) Approach shot test

A wedge ("RTX (registered trademark) 3 BLADE", Loft angle: 58°, available from Cleveland Golf Inc.) was installed on a swing machine available from Golf Laboratories, Inc. The hitting point was set at the face center. The golf ball was hit under a condition of a head speed of 16 m/sec, and the ball velocity and spin rate right after hitting the golf ball, and the rolling distance (the distance from the landing point to the stop point) were measured. The measurement was conducted twelve times for each golf ball, and the average value thereof was adopted as the measurement value for that golf ball. The ball velocity and spin rate were measured by continuously taking a sequence of photographs of the golf ball right after hitting the golf ball.

### (6) Shot feeling

A wedge ("RTX (registered trademark) 3 BLADE", Loft angle: 58°, available from Cleveland Golf Inc.) was used by 20 golfers to conduct an actual hitting on a 20-yard approach shot, and the shot feeling was evaluated in three stages: hard, ordinary and soft.

### Evaluation standard

E (Excellent): At least 16 golfers evaluated that the shot feeling was soft.
G (Good): At least 12 and up to 15 golfers evaluated that the shot feeling was soft.
F (Fair): At least 8 and up to 11 golfers evaluated that the shot feeling was soft.
P (Poor): At most 7 golfers evaluated that the shot feeling was soft.

### [Production of golf ball]

### (1) Production of spherical core

According to the formulations shown in Table 1, the materials were kneaded with a kneading roll to obtain the core compositions.

The core compositions shown in Table 1 were heat pressed in upper and lower molds, each having a hemispherical cavity, to obtain the spherical cores. It is noted that barium sulfate was added in an appropriate amount such that the obtained golf balls had a mass of 45.3 g.

**Table 1-1**

| Spherical core No. | | A1 | A2 | B1 | B2 |
|---|---|---|---|---|---|
| Formulation (parts by mass) | Polybutadiene rubber | 20 | 20 | - | - |
| | Natural rubber | 80 | 80 | 100 | 100 |
| | Zinc diacrylate | 45.0 | 45.0 | 46.3 | 46.3 |
| | Zinc oxide | 5 | 5 | 5 | 5 |
| | Barium sulfate | Appropriate amount*¹⁾ | Appropriate amount*¹⁾ | Appropriate amount*¹⁾ | Appropriate amount*¹⁾ |
| | Benzoic acid | - | - | - | - |
| | Bis(pentabromophenyl) disulfide | - | - | - | - |
| | Diphenyl disulfide | - | - | - | - |
| | Dicumyl peroxide | 0.9 | 0.9 | 0.9 | 0.9 |
| Molding condition | Vulcanizing temperature (°C) | 170 | 170 | 170 | 170 |
| | Vulcanizing time (min) | 20 | 20 | 20 | 20 |
| Diameter (mm) | | 39.5 | 39.1 | 39.5 | 38.5 |
| Compression deformation amount (mm) | | 3.21 | 3.24 | 3.13 | 3.18 |
| Hardness distribution (Shore C) | Center hardness (H0) | 55.9 | 55.6 | 48.8 | 48.3 |
| | Hardness at 2.5 mm point from center (H_{2.5}) | 60.2 | 59.8 | 58.6 | 58.2 |
| | Hardness at 5.0 mm point from center (H_{5.0}) | 63.4 | 63.1 | 63.5 | 63.1 |
| | Hardness at 7.5 mm point from center (H_{7.5}) | 64.1 | 63.8 | 66.0 | 65.4 |
| | Hardness at 10 mm point from center (H₁₀) | 64.4 | 64.1 | 68.7 | 68.3 |
| | Hardness at 12.5 mm point from center (H_{12.5}) | 72.8 | 72.2 | 75.1 | 74.4 |
| | Hardness at 15 mm point from center (H₁₅) | 79.1 | 78.7 | 79.7 | 79.1 |
| | Surface hardness (H_{S}) | 82.2 | 81.6 | 82.3 | 81.6 |

| | | | | | |
|---|---|---|---|---|---|
| *1) The amount of barium sulfate was adjusted such that the golf balls had a mass of 45.3 g. | | | | | |

**Table 1-2**

| Spherical core No. | | C | D | E | F |
|---|---|---|---|---|---|
| Formulation (parts by mass) | Polybutadiene rubber | 60 | 100 | 100 | 100 |
| | Natural rubber | 40 | - | - | - |
| | Zinc diacrylate | 40.7 | 34.3 | 30.6 | 33.2 |
| | Zinc oxide | 5 | 5 | 5 | 10 |
| | Barium sulfate | Appropriate amount^{*1)} | Appropriate amount^{*1)} | Appropriate amount^{*1)} | Appropriate amount^{*1)} |
| | Benzoic acid | - | - | - | 2 |
| | Bis(pentabromophenyl) disulfide | - | - | 0.4 | 0.4 |
| | Diphenyl disulfide | - | 0.4 | - | - |
| | Dicumyl peroxide | 0.9 | 0.7 | 0.7 | 0.7 |
| Molding condition | Vulcanizing temperature (°C) | 170 | 150 | 155 | 170 |
| | Vulcanizing time (min) | 20 | 20 | 20 | 15 |
| Diameter (mm) | | 39.5 | 39.5 | 39.5 | 39.5 |
| Compression deformation amount (mm) | | 3.18 | 3.18 | 3.16 | 3.20 |
| Hardness distribution (Shore C) | Center hardness (H0) | 59.1 | 70.7 | 64.8 | 55.4 |
| | Hardness at 2.5 mm point from center (H_{2.5}) | 62.1 | 71.9 | 67.7 | 65.1 |
| | Hardness at 5.0 mm point from center (H_{5.0}) | 63.9 | 72.5 | 69.3 | 69.6 |
| | Hardness at 7.5 mm point from center (H_{7.5}) | 64.4 | 73.0 | 69.9 | 70.2 |
| | Hardness at 10 mm point from center (H₁₀) | 65.5 | 75.5 | 72.6 | 70.6 |
| | Hardness at 12.5 mm point from center (H_{12.5}) | 71.9 | 77.1 | 75.1 | 71.0 |
| | Hardness at 15 mm point from center (H₁₅) | 78.3 | 77.7 | 79.8 | 76.7 |
| | Surface hardness (Hs) | 81.2 | 79.3 | 82.2 | 86.2 |

| | | | | | |
|---|---|---|---|---|---|
| *1) The amount of barium sulfate was adjusted such that the golf balls had a mass of 45.3 g. | | | | | |

The materials used in Table 1 are shown as follows.
Polybutadiene rubber: "BR-730" (high-cis polybutadiene rubber, amount of cis-1,4 bond: 95 mass %, amount of 1,2-vinyl bond: 1.3 mass %, Moony viscosity (ML₁₊₄ (100 ºC): 55, molecular weight distribution (Mw/Mn): 3) available from JSR Corporation
Natural rubber: "CV60" (Moony viscosity (ML₁₊₄ (100 ºC) = 60) available from Dau Tieng Rubber Corporation
Zinc diacrylate: "ZN-DA90S" available from Nisshoku Techno Fine Chemical Co., Ltd.
Zinc oxide: "Ginrei R" available from Toho Zinc Co., Ltd.
Barium sulfate: "Barium sulfate BD" available from Sakai Chemical Industry Co., Ltd.
Benzoic acid: (purity: at least 98%) available from Tokyo Chemical Industry Co. Ltd.
Bis(pentabromophenyl) disulfide: available from Kawaguchi Chemical Industry Co., Ltd.
Diphenyl disulfide: available from Sumitomo Seika Chemicals Co., Ltd.
Dicumyl peroxide: "Percumyl (registered trademark) D" available from NOF Corporation

### (2) Preparation of resin compositions (intermediate layer composition and cover composition)

According to the formulations shown in Table 2, The materials were extruded with a twin-screw kneading type extruder to prepare the resin compositions in a pellet form.

**Table 2**

| Resin composition No. | | a | b | c | d | e | f | 9 |
|---|---|---|---|---|---|---|---|---|
| Formulation (parts by mass) | Surlyn 8150 | 50 | - | - | - | - | - | - |
| | Himilan 1605 | - | 47 | - | - | - | - | - |
| | Himilan AM7329 | 50 | 50 | - | - | - | - | - |
| | Himilan 1555 | - | - | 45 | 41 | - | - | - |
| | Himilan 1557 | - | - | 45 | 41 | - | - | - |
| | TEFABLOC T3221C | - | 3 | 10 | 18 | - | - | - |
| | Elastollan NY80A | - | - | - | - | 100 | - | - |
| | Elastollan NY84A | - | - | - | - | - | 100 | - |
| | Elastollan NY88A | - | - | - | - | - | - | 50 |
| | Elastollan NY95A | - | - | - | - | - | - | 50 |
| | Tinuvin 770 | - | - | - | - | 0.2 | 0.2 | 0.2 |
| | Titanium dioxide | 4 | 4 | 4 | 4 | 4 | 4 | 4 |
| Slab hardness (Shore D) | | 68 | 63 | 55 | 50 | 27 | 31 | 40 |

| | | | | | | | | |
|---|---|---|---|---|---|---|---|---|
| Surlyn (registered trademark) 8150: sodium ion neutralized ethylene-methacrylic acid copolymer ionomer resin available from E.I. du Pont de Nemours and Company Himilan (registered trademark) 1605: sodium ion neutralized ethylene-methacrylic acid copolymer ionomer resin available from Dow-Mitsui Polychemicals Co., Ltd. Himilan (registered trademark) AM7329: zinc ion neutralized ethylene-methacrylic acid copolymer ionomer resin available from Dow-Mitsui Polychemicals Co., Ltd. Himilan (registered trademark) 1555: sodium ion neutralized ethylene-methacrylic acid copolymer ionomer resin available from Dow-Mitsui Polychemicals Co., Ltd. Himilan (registered trademark) 1557: zinc ion neutralized ethylene-methacrylic acid copolymer ionomer resin available from Dow-Mitsui Polychemicals Co., Ltd. TEFABLOC T3221C: thermoplastic styrene based elastomer available from Mitsubishi Chemical Corporation Elastollan (registered trademark) NY80A: thermoplastic polyurethane elastomer available from BASF Japan Ltd. Elastollan (registered trademark) NY84A: thermoplastic polyurethane elastomer available from BASF Japan Ltd. Elastollan (registered trademark) NY88A: thermoplastic polyurethane elastomer available from BASF Japan Ltd. Elastollan (registered trademark) NY95A: thermoplastic polyurethane elastomer available from BASF Japan Ltd. Tinuvin (registered trademark) 770: hindered amine-based light stabilizer available from BASF Japan Ltd. Titanium dioxide: A-220 available from Ishihara Sangyo Kaisha, Ltd. | | | | | | | | |

### (3) Formation of intermediate layer and cover

The resin compositions (intermediate layer compositions) were injection molded on the spherical cores to obtain the intermediate layer-covering spherical bodies. The obtained intermediate layer-covering spherical bodies were charged into a final mold provided with a plurality of pimples on the cavity surface. Half shells were obtained from the resin compositions (cover compositions) by a compression molding method. The intermediate layer-covering spherical bodies charged into the final mold were covered with two of the half shells to obtain the golf balls having an outermost cover on which a plurality of dimples with an inverted shape of the pimple shape on the cavity surface were formed. The evaluation results regarding the obtained golf balls are shown in Table 3.

**Table 3-1**

| Golf ball No. | | 1 | 2 | 3 | 4 | 5 | 6 | 7 |
|---|---|---|---|---|---|---|---|---|
| Spherical core | No. | A1 | B1 | A1 | A1 | A2 | B2 | C |
| | Diameter (mm) | 39.5 | 39.5 | 39.5 | 39.5 | 39.1 | 38.5 | 39.5 |
| | Compression deformation amount (mm) | 3.21 | 3.13 | 3.21 | 3.21 | 3.24 | 3.18 | 3.18 |
| Hardness difference (Shore C) | Hardness difference (H_{2.5}-H0) | 4.3 | 9.8 | 4.3 | 4.3 | 4.2 | 9.9 | 3.0 |
| | Hardness difference (H_{5.0}-H_{2.5}) | 3.2 | 4.9 | 3.2 | 3.2 | 3.3 | 4.9 | 1.8 |
| | Hardness difference (H_{7.5}-H_{5.0}) | 0.7 | 2.5 | 0.7 | 0.7 | 0.7 | 2.3 | 0.5 |
| | Hardness difference (H₁₀-H_{7.5}) | 0.3 | 2.7 | 0.3 | 0.3 | 0.3 | 2.9 | 1.1 |
| | Hardness difference (H_{12.5}-H₁₀) | 8.4 | 6.4 | 8.4 | 8.4 | 8.1 | 6.1 | 6.4 |
| | Hardness difference (H₁₅-H_{12.5}) | 6.3 | 4.6 | 6.3 | 6.3 | 6.5 | 4.7 | 6.4 |
| | Hardness difference (Hs-H₁₅) | 3.1 | 2.6 | 3.1 | 3.1 | 2.9 | 2.5 | 2.9 |
| | Hardness difference (Hs-H0) | 26.3 | 33.5 | 26.3 | 26.3 | 26.0 | 33.3 | 22.1 |
| Intermediate layer | Resin composition No. | a | a | b | c | a | a | a |
| | Thickness (mm) | 1.0 | 1.0 | 1.0 | 1.0 | 1.0 | 1.3 | 1.0 |
| | Slab hardness (Shore D) | 68 | 68 | 63 | 55 | 68 | 68 | 68 |
| Cover | Resin composition No. | f | f | g | e | f | f | f |
| | Thickness (mm) | 0.6 | 0.6 | 0.6 | 0.6 | 0.8 | 0.8 | 0.6 |
| | Slab hardness (Shore D) | 31 | 31 | 40 | 27 | 31 | 31 | 31 |
| Golf ball | Surface hardness (Shore D) | 59 | 59 | 60 | 52 | 56 | 56 | 59 |
| | Compression deformation amount (mm) | 2.76 | 2.68 | 2.79 | 2.84 | 2.82 | 2.75 | 2.73 |
| Approach shot | Spin rate (rpm) | 4840 | 4780 | 4770 | 5090 | 5010 | 4960 | 4860 |
| | Ball velocity (m/s) | 15.4 | 15.1 | 15.3 | 15.1 | 15.3 | 15.2 | 15.7 |
| | Rolling distance (m) | 7.1 | 6.8 | 7.1 | 6.5 | 6.9 | 6.8 | 7.3 |
| | Shot feeling | G | E | G | E | E | E | G |

**Table 3-2**

| Golf ball No. | | 8 | 9 | 10 | 11 | 12 | 13 |
|---|---|---|---|---|---|---|---|
| Spherical core | No. | D | E | F | A1 | E | E |
| | Diameter (mm) | 39.5 | 39.5 | 39.5 | 39.5 | 39.5 | 39.5 |
| | Compression deformation amount (mm) | 3.18 | 3.16 | 3.20 | 3.21 | 3.16 | 3.16 |
| Hardness difference (Shore C) | Hardness difference (H_{2.5}-H0) | 1.2 | 2.9 | 9.7 | 4.3 | 2.9 | 2.9 |
| | Hardness difference (H_{5.0}-H_{2.5}) | 0.6 | 1.6 | 4.5 | 3.2 | 1.6 | 1.6 |
| | Hardness difference (H_{7.5}-H_{5.0}) | 0.5 | 0.6 | 0.6 | 0.7 | 0.6 | 0.6 |
| | Hardness difference (H₁₀-H_{7.5}) | 2.5 | 2.7 | 0.4 | 0.3 | 2.7 | 2.7 |
| | Hardness difference (H_{12.5}-H₁₀) | 1.6 | 2.5 | 0.4 | 8.4 | 2.5 | 2.5 |
| | Hardness difference (H₁₅-H_{12.5}) | 0.6 | 4.7 | 5.7 | 6.3 | 4.7 | 4.7 |
| | Hardness difference (Hs-H₁₅) | 1.6 | 2.4 | 9.5 | 3.1 | 2.4 | 2.4 |
| | Hardness difference (Hs-H0) | 8.6 | 17.4 | 30.8 | 26.3 | 17.4 | 17.4 |
| Intermediate layer | Resin composition No. | a | a | a | d | g | d |
| | Thickness (mm) | 1.0 | 1.0 | 1.0 | 1.0 | 1.0 | 1.0 |
| | Slab hardness (Shore D) | 68 | 68 | 68 | 50 | 50 | 50 |
| Cover | Resin composition No. | f | f | f | c | b | c |
| | Thickness (mm) | 0.6 | 0.6 | 0.6 | 0.6 | 0.6 | 0.6 |
| | Slab hardness (Shore D) | 31 | 31 | 31 | 55 | 63 | 55 |
| Golf ball | Surface hardness (Shore D) | 59 | 59 | 59 | 53 | 53 | 53 |
| | Compression deformation amount (mm) | 2.73 | 2.71 | 2.75 | 2.68 | 2.62 | 2.66 |
| Approach shot | Spin rate (rpm) | 4930 | 4860 | 4800 | 4210 | 4330 | 4240 |
| | Ball velocity (m/s) | 16.2 | 16.3 | 16.2 | 15.5 | 16.1 | 16.4 |
| | Rolling distance (m) | 7.9 | 8.1 | 8.0 | 8.1 | 8.5 | 9.0 |
| | Shot feeling | F | F | F | F | P | P |

The golf balls No. 1 to 7 are the cases that the spherical core is formed from a rubber composition containing a natural rubber, has a hardness distribution satisfying a relationship of H0<H_{2.5}<H_{5.0}<H_{7.5}<H₁₀<H_{12.5}<H₁₅<Hs, and has the center hardness (H0) of 60 or less in Shore C hardness, and a slab hardness of an intermediate layer composition is greater than a slab hardness of a cover composition. These golf balls No. 1 to 7 have a ball velocity controlled to a low level, a reduced rolling distance, and a good shot feeling on approach shots. Thus, these golf balls No. 1 to 7 have a good shot feeling and improved controllability on approach shots.

The golf balls No. 8 to 10, 12 and 13 are the cases that the spherical core is formed from a rubber composition not containing a natural rubber.

The golf ball No. 11 is the case that a slab hardness of an intermediate layer composition is smaller than a slab hardness of a cover composition, although the spherical core is formed from a rubber composition containing a natural rubber, has a hardness distribution satisfying a relationship of H0<H_{2.5}<H_{5.0}<H_{7.5}<H₁₀<H_{12.5}<H₁₅<Hs, and has the center hardness (H0) of 60 or less in Shore C hardness.

These golf balls No. 8 to 13 have a long rolling distance and poor shot feeling on approach shots. Thus, these golf balls No. 8 to 13 have poor controllability on approach shots.

## Claims

1. A golf ball (2) comprising a spherical core (4), an intermediate layer (6) covering the spherical core (4), and an outermost cover (8) covering the intermediate layer (6), wherein
the spherical core (4) is formed from a rubber composition containing a base rubber, a co-crosslinking agent, and a crosslinking initiator,
the spherical core (4) having a diameter of 34.8 mm or more and 42.2 mm or less,
the base rubber contains a natural rubber,
a center hardness H0 of the spherical core (4), a hardness H_{2.5} at a point having a radial distance of 2.5 mm from a center of the spherical core (4), a hardness H_{5.0} at a point having a radial distance of 5.0 mm from the center of the spherical core (4), a hardness H_{7.5} at a point having a radial distance of 7.5 mm from the center of the spherical core (4), a hardness H₁₀at a point having a radial distance of 10 mm from the center of the spherical core (4), a hardness H_{12.5} at a point having a radial distance of 12.5 mm from the center of the spherical core (4), a hardness H₁₅ at a point having a radial distance of 15 mm from the center of the spherical core (4), and a surface hardness Hs of the spherical core (4) satisfy a relationship of H0<H_{2.5}<H_{5.0}<H_{7.5}<H₁₀<H_{12.5}<H₁₅<Hs,
the center hardness H0 of the spherical core (4) is 60 or less in Shore C hardness, and
a slab hardness of an intermediate layer composition forming the intermediate layer (6) is greater than a slab hardness of a cover composition forming the outermost cover (8)
**characterized in that**
the base rubber contains the natural rubber and a synthesized rubber and wherein an amount of the natural rubber is 30 mass % or more in 100 mass % of the base rubber or
**in that** the base rubber consists of the natural rubber.

2. The golf ball (2) according to claim 1, wherein the center hardness H0, the hardness H_{2.5}, the hardness H₁₀, the hardness H_{12.5} and the hardness H₁₅ satisfy relationships of H_{2.5}-H0≥3.0, H_{12.5}-H₁₀≥3.0 and H₁₅-H_{12.5}≥3.0 in Shore C hardness.

3. The golf ball (2) according to claim 1 or 2, wherein the hardness H_{5.0}, the hardness H_{7.5} and the hardness H₁₀ satisfy relationships of H_{7.5}-H_{5.0}<3.0 and H₁₀-H_{7.5}<3.0 in Shore C hardness.

4. The golf ball (2) according to any one of claims 1 to 3, wherein a hardness difference Hs-H0 between the surface hardness Hs of the spherical core (4) and the center hardness H0 of the spherical core (4) is 20 or more in Shore C hardness.

5. The golf ball according to any one of claims 1 to 4, wherein
if the base rubber contains the natural rubber and the synthesized rubber, an amount of the natural rubber is 70 mass % or more in 100 mass % of the base rubber.

6. The golf ball (2) according to any one of claims 1 to 5, wherein a cover composition forming the outermost cover (8) is a resin composition containing a urethane resin as a base resin, and
a slab hardness of the cover composition forming the outermost cover (8) is 40 or less in Shore D hardness.

7. The golf ball (2) according to any one of claims 1 to 6, wherein an intermediate layer composition forming the intermediate layer (6) is a resin composition containing an ionomer resin as a base resin, and
a slab hardness of the intermediate layer composition forming the intermediate layer (6) is 50 or more in Shore D hardness.

8. The golf ball (2) according to any one of claims 1 to 7, wherein the center hardness H0 of the spherical core (4) ranges from 42 to 60 in Shore C hardness.

9. The golf ball (2) according to any one of claims 1 to 8, wherein the surface hardness Hs of the spherical core (4) ranges from 70 to 90 in Shore C hardness.

10. The golf ball (2) according to any one of claims 2 to 9, wherein the center hardness H0, the hardness H_{2.5}, the hardness H₁₀, the hardness H_{12.5} and the hardness H₁₅ satisfy relationships of 12.0≥H_{2.5}-H0≥3.0, 11.0≥H_{12.5}-H₁₀≥3.0 and 10.0≥H₁₅-H_{12.5}≥3.0 in Shore C hardness.

11. The golf ball (2) according to any one of claims 3 to 10, wherein the hardness H_{5.0}, the hardness H_{7.5} and the hardness H₁₀ satisfy relationships of 0.2≤H_{7.5}-H_{5.0}<3.0 and 0.1≤H₁₀-H_{7.5}<3.0 in Shore C hardness.

12. The golf ball (2) according to any one of claims 4 to 11, wherein the hardness difference Hs-H0ranges from 20 to 40 in Shore C hardness.

## Patentansprüche

1. Golfball (2), umfassend einen kugelförmigen Kern (4), eine den kugelförmigen Kern (4) bedeckende Zwischenschicht (6) und eine die Zwischenschicht (6) bedeckende äußerste Hülle (8), wobei
der kugelförmige Kern (4) mit einer Kautschukzusammensetzung gebildet ist, die einen Basiskautschuk, ein Co-Vernetzungsmittel und einen Vernetzungsinitiator enthält,
wobei der kugelförmige Kern (4) einen Durchmesser von 34,8 mm oder mehr und 42,2 mm oder weniger aufweist,
der Basiskautschuk einen Naturkautschuk enthält,
eine Zentrumshärte H0 des kugelförmigen Kerns (4), eine Härte H_{2,5} an einem Punkt mit einem radialen Abstand von 2,5 mm von einem Zentrum des kugelförmigen Kerns (4), eine Härte H_{5,0} an einem Punkt mit einem radialen Abstand von 5,0 mm vom Zentrum des kugelförmigen Kerns (4), eine Härte H_{7,5} an einem Punkt mit einem radialen Abstand von 7,5 mm vom Zentrum des kugelförmigen Kerns (4), eine Härte H₁₀ an einem Punkt mit einem radialen Abstand von 10 mm vom Zentrum des kugelförmigen Kerns (4), eine Härte H_{12,5} an einem Punkt mit einem radialen Abstand von 12,5 mm vom Zentrum des kugelförmigen Kerns (4), eine Härte H₁₅ an einem Punkt mit einem radialen Abstand von 15 mm vom Zentrum des kugelförmigen Kerns (4) und eine Oberflächenhärte Hs des kugelförmigen Kerns (4) eine Beziehung H0<H_{2,5}<H_{5,0}<H_{7,5}<H₁₀<H_{12,5}<H₁₅<Hₛ erfüllen,
die Zentrumshärte H0 des kugelförmigen Kerns (4) 60 oder weniger in Shore-C-Härte beträgt, und
eine Plattenhärte einer die Zwischenschicht (6) bildenden Zwischenschichtzusammensetzung größer ist als eine Plattenhärte einer die äußerste Hülle (8) bildenden Hüllenzusammensetzung,
**dadurch gekennzeichnet, dass**
der Basiskautschuk den Naturkautschuk und einen synthetischen Kautschuk enthält, und wobei ein Anteil des Naturkautschuk 30 Massen-% oder mehr in 100 Massen-% des Basiskautschuks beträgt, oder
dass der Basiskautschuk aus dem Naturkautschuk besteht.

2. Golfball (2) nach Anspruch 1, wobei die Zentrumshärte H0, die Härte H_{2,5}, die Härte H₁₀, die Härte H_{12,5} und die Härte H₁₅ Beziehungen H_{2,5}-H0≥3,0, H_{12,5}-H₁₀≥3,0 und H₁₅-H_{12,5≥}3,0 in Shore-C-Härte erfüllen.

3. Golfball (2) nach Anspruch 1 oder 2, wobei die Härte H_{5,0}, die Härte H_{7,5} und die Härte H₁₀ Beziehungen H_{7,5}-H_{5,0}<3,0 und H₁₀-H_{7,5}<3,0 in Shore-C-Härte erfüllen.

4. Golfball (2) nach einem der Ansprüche 1 bis 3, wobei eine Härtedifferenz Hs-H0 zwischen der Oberflächenhärte Hs des kugelförmigen Kerns (4) und der Zentrumshärte H0 des kugelförmigen Kerns (4) 20 oder mehr in Shore-C-Härte beträgt.

5. Golfball nach einem der Ansprüche 1 bis 4, wobei,
wenn der Basiskautschuk den Naturkautschuk und den synthetischen Kautschuk enthält, eine Menge des Naturkautschuks 70 Massen-% oder mehr in 100 Massen-% des Basiskautschuks beträgt.

6. Golfball (2) nach einem der Ansprüche 1 bis 5, wobei eine die äußerste Hülle (8) bildende Hüllenzusammensetzung eine Harzzusammensetzung ist, die ein Urethanharz als Basisharz enthält, und
eine Plattenhärte der die äußerste Hülle (8) bildenden Hüllenzusammensetzung 40 oder weniger in Shore-D-Härte beträgt.

7. Golfball (2) nach einem der Ansprüche 1 bis 6, wobei eine die Zwischenschicht (6) bildende Zwischenschichtzusammensetzung eine Harzzusammensetzung ist, die ein Ionomerharz als Basisharz enthält, und
eine Plattenhärte der die Zwischenschicht (6) bildenden Zwischenschichtzusammensetzung 50 oder mehr in Shore-D-Härte beträgt.

8. Golfball (2) nach einem der Ansprüche 1 bis 7, wobei die Zentrumshärte H0 des kugelförmigen Kerns (4) im Bereich von 42 bis 60 Shore-C-Härte liegt.

9. Golfball (2) nach einem der Ansprüche 1 bis 8, wobei die Oberflächenhärte Hs des kugelförmigen Kerns (4) im Bereich von 70 bis 90 Shore-C-Härte liegt.

10. Golfball (2) nach einem der Ansprüche 2 bis 9, wobei die Zentrumshärte H0, die Härte H_{2,5}, die Härte H₁₀, die Härte H_{12,5} und die Härte H₁₅ Beziehungen 12,0≥H_{2,5}-H0≥3,0, 11,0≥H_{12,5}-H10≥3,0 und 10,0≥H₁₅-H_{12,5}≥3,0 in Shore-C-Härte erfüllen.

11. Golfball (2) nach einem der Ansprüche 3 bis 10, wobei die Härte H_{5,0}, die Härte H_{7,5} und die Härte H₁₀ Beziehungen 0,2≤H_{7,5}-H_{5,0}<3,0 und 0,1≤H₁₀-H_{7,5}<3,0 in Shore-C-Härte erfüllen.

12. Golfball (2) nach einem der Ansprüche 4 bis 11, wobei die Härtedifferenz Hs-H0 im Bereich von 20 bis 40 in Shore-C-Härte liegt.

## Revendications

1. Balle de golf (2) comprenant un noyau sphérique (4), une couche intermédiaire (6) recouvrant le noyau sphérique (4) et une couverture la plus externe (8) recouvrant la couche intermédiaire (6),
le noyau sphérique (4) étant formé à partir d'une composition de caoutchouc contenant un caoutchouc de base, un agent de co-réticulation et un initiateur de réticulation,
le noyau sphérique (4) ayant un diamètre de 34,8 mm ou plus et de 42,2 mm ou moins,
le caoutchouc de base contenant un caoutchouc naturel,
une dureté centrale H0 du noyau sphérique (4), une dureté H_{2,5} en un point ayant une distance radiale de 2,5 mm par rapport à un centre du noyau sphérique (4), une dureté H_{5,0} en un point ayant une distance radiale de 5,0 mm par rapport au centre du noyau sphérique (4), une dureté H_{7,5} en un point ayant une distance radiale de 7,5 mm par rapport au centre du noyau sphérique (4), une dureté H₁₀ en un point ayant une distance radiale de 10 mm par rapport au centre du noyau sphérique (4), une dureté H_{12,5} en un point ayant une distance radiale de 12,5 mm du centre du noyau sphérique (4), une dureté H₁₅ en un point ayant une distance radiale de 15 mm par rapport au centre du noyau sphérique (4), et une dureté de surface Hs du noyau sphérique (4) satisfaisant à la relation de H0<H_{2,5}<H_{5,0}<H_{7,5}<H₁₀<H_{12,5}<H₁₅<Hs,
la dureté centrale H0 du noyau sphérique (4) étant de 60 ou moins en dureté Shore C, et
une dureté de plaque d'une composition de couche intermédiaire formant la couche intermédiaire (6) est supérieure à la dureté de plaque d'une composition de couverture formant la couverture la plus externe (8),
**caractérisée en ce que**
le caoutchouc de base contient le caoutchouc naturel et un caoutchouc synthétisé, et une quantité du caoutchouc naturel étant de 30 % en masse ou plus dans 100 % en masse du caoutchouc de base, ou
**en ce que** le caoutchouc de base est constitué du caoutchouc naturel.

2. Balle de golf (2) selon la revendication 1, dans laquelle la dureté centrale H0, la dureté H_{2,5}, la dureté H₁₀, la dureté H_{12,5} et la dureté H₁₅ satisfont à des relations de H_{2,5}-H0≥3,0, H_{12,5}-H₁₀ ≥3,0 et H₁₅-H_{12,5}≥3,0 en dureté Shore C.

3. Balle de golf (2) selon la revendication 1 ou 2, dans laquelle la dureté H_{5,0}, la dureté H_{7,5} et la dureté H₁₀ satisfont à des relations de H_{7,5}-H_{5,0}<3,0 et H₁₀-H_{7,5}<3,0 en dureté Shore C.

4. Balle de golf (2) selon l'une quelconque des revendications 1 à 3, dans laquelle la différence de dureté Hs-H0 entre la dureté de surface Hs du noyau sphérique (4) et la dureté centrale H0 du noyau sphérique (4) est de 20 ou plus en dureté Shore C.

5. Balle de golf selon l'une quelconque des revendications 1 à 4, dans laquelle si le caoutchouc de base contient le caoutchouc naturel et le caoutchouc synthétisé, une quantité du caoutchouc naturel est de 70 % en masse ou plus dans 100 % en masse du caoutchouc de base.

6. Balle de golf (2) selon l'une quelconque des revendications 1 à 5, dans laquelle une composition de couverture formant la couverture la plus externe (8) est une composition de résine contenant une résine d'uréthane comme résine de base, et
une dureté de plaque de la composition de couverture formant la couverture la plus externe (8) est inférieure ou égale à 40 en dureté Shore D.

7. Balle de golf (2) selon l'une quelconque des revendications 1 à 6, dans laquelle une composition de couche intermédiaire formant la couche intermédiaire (6) est une composition de résine contenant une résine ionomère comme résine de base, et
une dureté de plaque de la composition de couche intermédiaire formant la couche intermédiaire (6) est de 50 ou plus en dureté Shore D.

8. Balle de golf (2) selon l'une quelconque des revendications 1 à 7, dans laquelle la dureté centrale H0 du noyau sphérique (4) va de 42 à 60 en dureté Shore C.

9. Balle de golf (2) selon l'une quelconque des revendications 1 à 8, dans laquelle la dureté de surface Hs du noyau sphérique (4) va de 70 à 90 en dureté Shore C.

10. Balle de golf (2) selon l'une quelconque des revendications 2 à 9, dans laquelle la dureté centrale H0, la dureté H_{2,5}, la dureté H₁₀, la dureté H_{12,5} et la dureté H₁₅ satisfont à des relations de 12,0≥H_{2,5}-H0≥3,0, 11,0≥H_{12,5}-H₁₀≥3,0 et 10,0≥H₁₅-H_{12,5}≥3,0 en dureté Shore C.

11. Balle de golf (2) selon l'une quelconque des revendications 3 à 10, dans laquelle la dureté H_{5,0}, la dureté H_{7,5} et la dureté H₁₀ satisfont à des relations de 0,2≤H_{7,5}-H_{5,0}<3,0 et 0,1≤H₁₀-H_{7,5}<3,0 en dureté Shore C.

12. Balle de golf (2) selon l'une quelconque des revendications 4 à 11, dans laquelle la différence de dureté Hs-H0 va de 20 à 40 en dureté Shore C.
